# EUROPEAN PATENT SPECIFICATION

(11) **EP 2 615 259 B1**
(45) Date of publication and mention of the grant of the patent: **09.01.2019**
(21) Application number: 12193851.8
(22) Date of filing: 22.11.2012
(51) Int. Cl.: F01D 25/16, F02C 7/28, F01D 11/04, F02C 7/27

(54) **Gas turbine engine bearing chamber seals**
Lagerkammerdichtungen für Gasturbinenmotor
Joints de la chambre de palier d'un moteur à turbine à gaz

(30) Priority: 10.01.2012 GB 201200289
(43) Date of publication of application: 17.07.2013
(73) Proprietor: Rolls-Royce plc, London SW1E 6AT (GB)
(72) Inventor: Heaton, Peter Ellison, Derby, DE73 6NB (GB); Clark, Lee Alan, Derby, DE72 2BT (GB)
(74) Representative: Rolls-Royce plc

(56) References cited:
- EP-A2- 0 890 781
- WO-A1-97/01053
- US-A- 5 911 678
- US-B2- 6 622 490

## Description

The present invention relates to a sealing air supply system for gas turbine engine seals. In particular, it relates to improvements in such systems during gas turbine engine starting.

Various seals in a gas turbine engine act to prevent oil loss from a chamber, for example of a bearing, by supply of sealing air into that chamber. Such seals are known as bearing chamber seals. This introduces a pressure differential across the bearing chamber seal which prevents egress of the oil. It is known to supply air bled from a compressor for this purpose.

One disadvantage of using compressor bleed air is that during engine starting the air pressure may be lower than that in the chamber. This means that the pressure differential across the bearing chamber seal is reversed and oil is able to leak from the chamber. Document WO 97/01053 A1 discloses a seal gas pressure booster system to raise the seal gas pressure during the starting phase of a gas compressor.

US 2 749 087 A discloses a gas turbine engine having a seal air system supplied during the starting phase by air from the high pressure compressor outlet and during operation by air from the low pressure compressor outlet.

The present invention provides a sealing air supply system that seeks to address the aforementioned problems.

Accordingly the present invention provides a gas turbine engine sealing air supply system comprising: a bearing chamber seal to prevent lubricant fluid loss from a fluid chamber, the sealing effected by ingress of sealing air; an air supply duct coupled to the bearing chamber seal to provide the sealing air; a starter air system of the gas turbine engine; and a first duct coupled between the starter air system and the air supply duct to supply sealing air during gas turbine engine starting.

Advantageously the sealing air supply system of the present invention maintains a positive pressure drop across the bearing chamber seal at all engine conditions, particularly during starting and cranking.

The sealing air supply system may further comprise a second air source and a second duct coupled between the second air source and the air supply duct to supply the sealing air during other periods of gas turbine engine operation. The second air source may comprise a compressor bleed of the gas turbine engine and the second duct may comprise a bleed duct.

The sealing air supply system may further comprise a switching mechanism to switch the supply of sealing air between the starter air system and the second air source. The switching mechanism may be active or passive. The sealing air supply system may comprise a control system arranged to control the switching mechanism. The control system may be arranged to switch between the starter air system and the second air source dependent on the air pressure of the starter air system. Alternatively, the control system may be arranged to switch between the starter air system and the second air source dependent on the air pressure of the second air source. In a further alternative, the control system may be arranged to switch between the starter air system and the second air source dependent on the relative air pressure of the starter air system and the second air source.

The sealing air supply system may comprise more than one bearing chamber seal each coupled to the air supply duct to receive the sealing air.

The starter air supply system may comprise a starter air turbine, a starter air valve and a starter air supply duct coupled therebetween. The first duct may be coupled to any component in the starter air system.

The sealing air supply system may further comprise a non-return valve in the first duct, the second duct or in each of the first and second ducts.

The first duct may be coupled between the starter air system and the air supply duct to supply sealing air at other periods of gas turbine engine operation.

The lubricant fluid may be oil. The fluid chamber may comprise a bearing.

The present invention also comprises a gas turbine engine comprising the sealing air supply system described.

The present invention will be more fully described by way of example with reference to the accompanying drawings, in which:
Figure 1 is a sectional side view of a gas turbine engine.
Figure 2 is a schematic illustration of the known sealing air supply system.
Figure 3 is a schematic illustration of a sealing air supply system in an engine starting configuration according to the present invention.
Figure 4 is a schematic illustration of a sealing air supply system in an engine running configuration according to the present invention.
Figures 5 to 7 are schematic illustrations of other sealing air supply systems in an engine starting configuration according to the present invention.

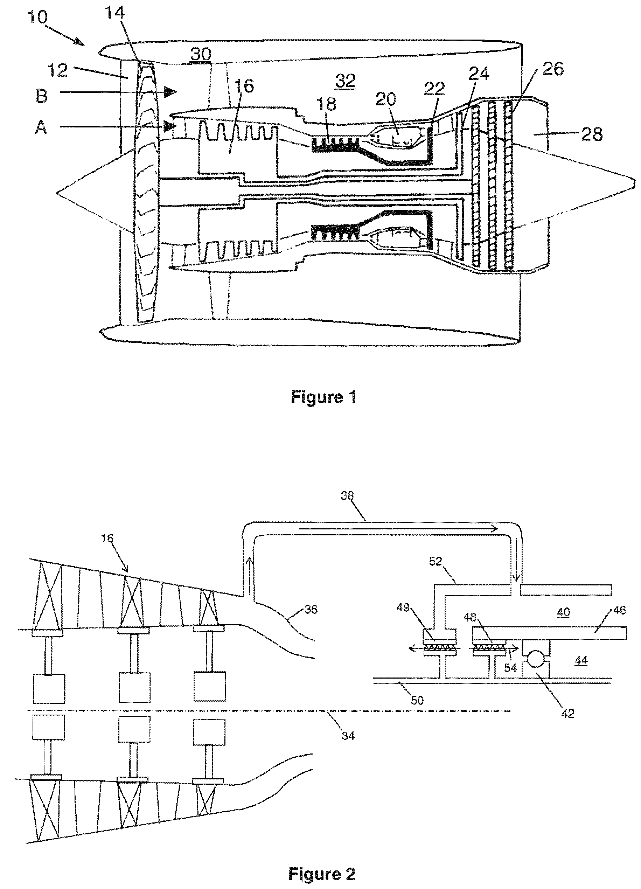

A gas turbine engine 10 is shown in Figure 1 and comprises an air intake 12 and a propulsive fan 14 that generates two airflows A and B. The gas turbine engine 10 comprises, in axial flow A, an intermediate pressure compressor 16, a high pressure compressor 18, a combustor 20, a high pressure turbine 22, an intermediate pressure turbine 24, a low pressure turbine 26 and an exhaust nozzle 28. A nacelle 30 surrounds the gas turbine engine 10 and defines, in axial flow B, a bypass duct 32. The gas turbine engine 10 may be used to power an aircraft, and may be one of two or more gas turbine engines 10 used to power such an aircraft.

Figure 2 illustrates a portion of a compressor, for example the intermediate pressure compressor 16, of the gas turbine engine 10 which rotates about the engine's centre line 34. The core airflow A is directed through the compressor duct 36 towards the combustor 20 and turbines 22, 24, 26. A bleed duct 38 is supplied to extract a proportion of the air from the compressor duct 36, for example 0.25% of the air flow. There may be a plurality of bleed ducts 38 in an annular array. Preferably the bleed ducts 38 are equi-angularly spaced.

The or each bleed duct 38 is coupled to an annular buffer 40. The buffer 40 surrounds a bearing 42, the bearing 42 being radially inward of the buffer 40. The bearing 42 is located within a chamber 44 that comprises a mixture of air and oil or another lubricant fluid. The buffer inner wall 46 is preferably also the outer wall of the bearing chamber 44. The buffer 40 is separated from the bearing 42 and the bearing chamber 44 by a bearing chamber sealing arrangement comprised of a bearing chamber seal 48 in this arrangement. A bearing chamber seal 49 is provided to isolate the pressure and temperature of the buffer 40 from the pressure and temperature of the intermediate pressure compressor 16 and other proximal zones of the engine 10. The bearing chamber seal 48 and buffer seal 49 typically comprises a labyrinth seal or other compliant seal to accommodate relative movement between the rotating element 50 to which the bearing chamber seal 48 and buffer seal 49 are attached and the buffer inner wall 46 and buffer outer wall 52 against which the bearing chamber seal 48 and buffer seal 49 respectively seal.

During normal operation of the gas turbine engine 10 air is bled from the intermediate pressure compressor 16 through the bleed duct 38 to the buffer 40. A small amount of sealing air is forced through the bearing chamber seal 48, as shown by arrow 54, due to the pressure differential between the buffer 40 and the bearing chamber 44. This sealing air flow 54 prevents the lubricant fluid from being lost from the bearing chamber 44 into the buffer 40, where it would contaminate the air. A small amount of sealing air is also forced through the buffer seal 49.

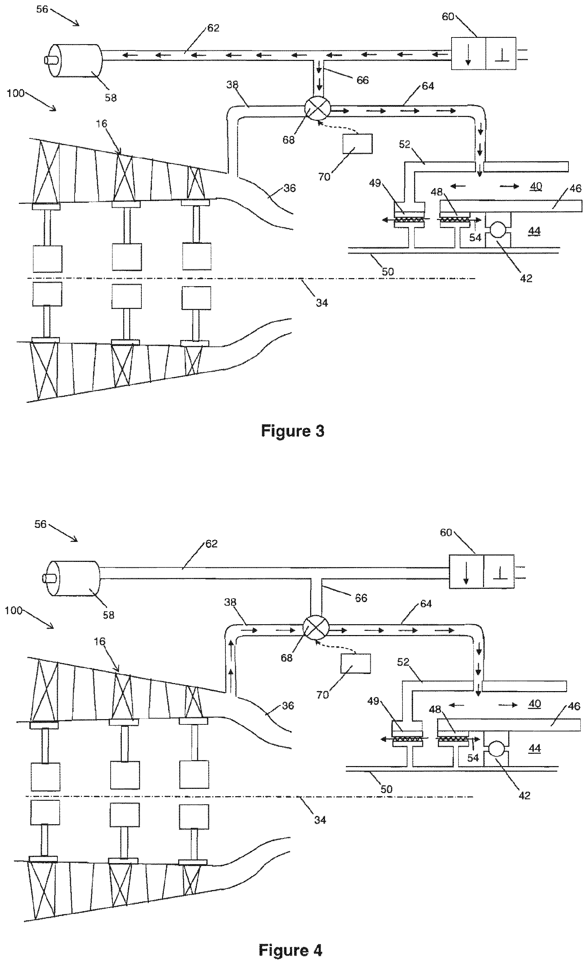

The present invention comprises many of the same features, each of which has the same reference numeral. During starting of the gas turbine engine 10 the pressure in the intermediate pressure compressor 16 is low. The sealing air supply system 100 of the present invention is described with respect to Figure 3 for engine starting conditions. The gas turbine engine 10 also comprises a starter air system 56 as known in the art. The starter air system 56 comprises an air turbine starter 58, a starter air valve 60 and a starter air supply duct 62 therebetween. To start the gas turbine engine 10 the starter air valve 60 is supplied with relatively high pressure air from a source, such as a ground cart, an auxiliary power unit of the aircraft or another gas turbine engine 10. The starter air valve 60 is opened to allow the air to flow through the starter air supply duct 62 to the air turbine starter 58 which is drivingly coupled to one or more of the shafts of the gas turbine engine 10 in order to crank the gas turbine engine 10.

In the sealing air supply system 100 of the present invention the bleed duct 38 is coupled to an air supply duct 64 so that air bled from the intermediate pressure compressor 16 flows through the bleed duct 38, into the air supply duct 64 and into the buffer 40. A first duct 66 is provided that couples between the starter air system 56 and the air supply duct 64. As shown in Figure 3 the first duct 66 is a tapping from the starter air supply duct 62. In the preferred arrangement shown in Figure 3, the bleed duct 38, air supply duct 64 and first duct 66 meet at a switching mechanism 68. The switching mechanism is arranged to switch supply to the air supply duct 64 between the starter air system 56 using the first duct 66 and the intermediate pressure compressor 16 using the bleed duct 38. Optionally there may also be a control system 70 arranged to control the switching mechanism 68. The control system 70 may exert active or passive control. The control system 70 may form part of the engine electronic controller, another extant controller or may be a separate control unit or control function.

During gas turbine engine starting, the switching mechanism 68 is arranged to open a flow path between the first duct 66 and the air supply duct 64 so that the buffer 40 is supplied by air from the starter air system 56 of the gas turbine engine 10. This air is at relatively high pressure and so there is a sufficient positive pressure differential between the buffer 40 and the bearing chamber 44 to prevent egress of the lubricant fluid. Thus the sealing air supply system 100 of the present invention overcomes the problem of the known system during starting by sourcing the sealing air from the starter air system 56 which is at higher pressure than the intermediate pressure compressor 16 or elsewhere in the core of the gas turbine engine 10.

Figure 4 shows the sealing air supply system 100 of the present invention during other engine conditions than starting, collectively "engine running". In these conditions the air bled from the intermediate pressure compressor 16 is of sufficient pressure to effectively seal the bearing chamber seal 48. The starter air system 56 may also be switched off so no air is available therefrom. Therefore, the switching mechanism 68 is arranged to close the flow path between the first duct 66 and the air supply duct 64 and open, instead, a flow path between a second duct, the bleed duct 38 and the air supply duct 64. In this arrangement the sealing air supply system 100 acts in the same manner as the known arrangement discussed with respect to Figure 2.

It is important that the switching mechanism 68 closes off the flow path that is not in use so that air is not fed into the back of the intermediate pressure compressor 16 during engine starting. This prevents the gas turbine engine 10 surging and/or stalling during start or experiencing other disadvantageous effects. Similarly, it is important to close off the other flow path during engine running so that air is not fed back into the starter air system 56 which may contaminate the air, or cause other disadvantageous effects to the starter system. This air may be used to supply air to the aircraft cabin in some applications.

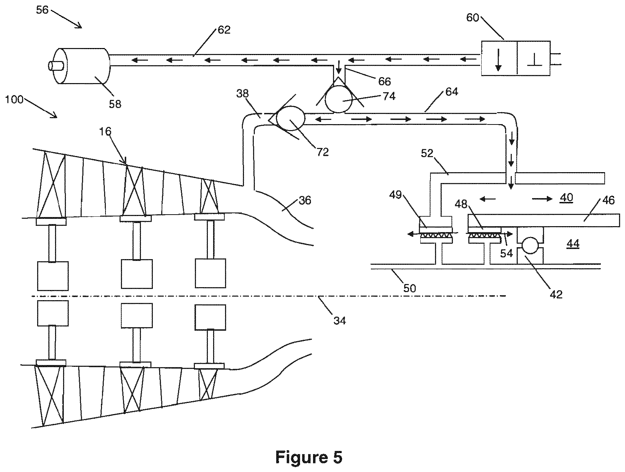

Each of Figures 5 to 7 is illustrated in the engine starting configuration. It will be understood that in the engine running configuration, the air flow to the buffer 40 is provided through the bleed duct 38 instead of through the first duct 66. The engine running configuration has not been illustrated for the additional arrangements.

Figure 5 shows the sealing air supply system 100 of the present invention with a different arrangement of switching mechanism 68. This is an example of a passive switching mechanism 68 which comprises a first non-return valve 72 located within the bleed duct 38. This acts to prevent air from flowing into the back of the intermediate pressure compressor 16, particularly when the pressure from the starter air system 56 is higher than the pressure of the intermediate pressure compressor 16, during engine starting. This is a passive switching mechanism because it is the pressure in the intermediate pressure compressor 16, or the relative pressure between that and the starter air system 56, that determines which air source supplies the air supply duct 64. There may also be a second non-return valve 74 located in the first duct 66 to prevent air from flowing back into the starter air system 56 during normal engine running.

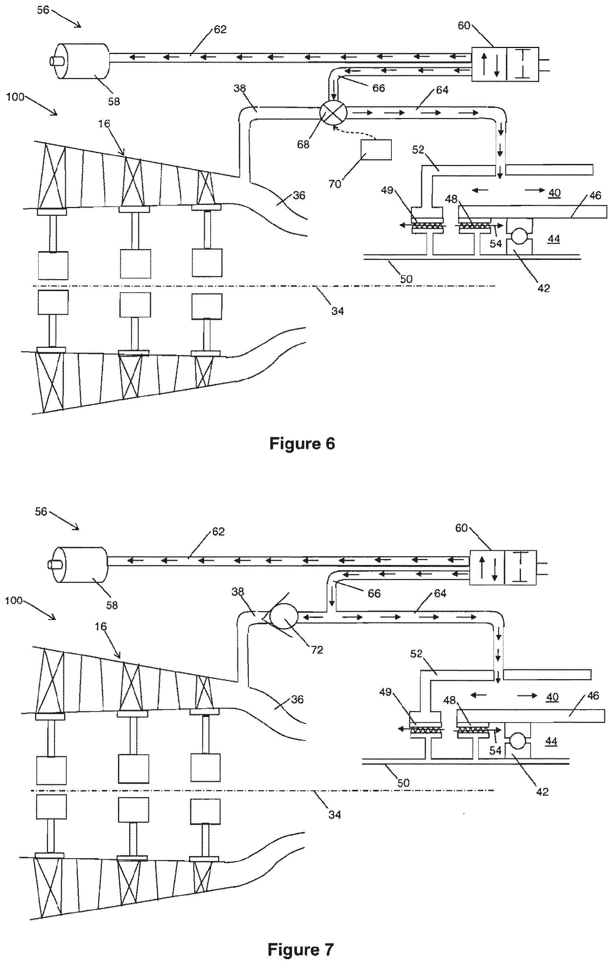

Figure 6 shows the sealing air supply system 100 of the present invention with a further arrangement of first duct 66. In this arrangement, the first duct 66 is coupled between the starter air valve 60 and the air supply duct 64 via the switching mechanism 68. Thus the first duct 66 inlet comprises a second outlet of the starter air valve 60 instead of a tapping from the starter air supply duct 62. This arrangement allows better control of the relative proportions of starter air directed to the air turbine starter 58 and the bearing chamber seal 48 at the expense of additional ducting.

Figure 7 shows the sealing air supply system 100 of the present invention with a further arrangement of first duct 66 and switching mechanism 68. This arrangement incorporates the first duct 66 arrangement shown in and described with respect to Figure 6 which extends between the starter air valve 60 and the air supply duct 64. In addition, this arrangement includes the first non-return valve 72 as a passive switching mechanism 68. Optionally, the second non-return valve 74 may be provided (not shown) or another device may be provided to close the first duct 66 when the engine is running not starting.

The following modifications and variations can be applied to any of the arrangements described and illustrated herein. Although the sealing air supply system 100 of the present invention has been described for use during engine starting, it may also be used during other engine phases. For example, for a gas turbine engine 10 used to power an aircraft the starter air system 56 may supply the bearing chamber seal 48 during descent idle when it is desirable to run the gas turbine engine 10 at low power but this results in too low pressure in the intermediate pressure compressor 16 to satisfactorily prevent lubricant fluid egress from the bearings 42.

Although the invention has been described as supplying one bearing chamber seal 48, it may equally be used to supply multiple bearing chamber seals 48. In particular, there are often bearing chamber seals 48 on each side of the bearing chamber 44, the one nearer the intermediate pressure compressor 16 as illustrated and a second one downstream of the bearing 42. Typically these bearing chamber seals 48 are all fed from the buffer 40. There may be other bearings 42 in other parts of the gas turbine engine 10 that are also fluidly isolated by bearing chamber seals 48. Preferably the air supply duct 64 is in the form of a manifold to supply each bearing chamber seal 48 or group of bearing chamber seals 48 from a pair of sources (the starter air system 56 and the second air source). Alternatively there may be multiple air supply ducts 64 each coupled to the starter air system 56 and the second air source.

The buffer 40 has been described as annular. However, it may instead be an annular array of buffers 40, for example arc-shaped buffers 40. Each buffer 40 in this case would be coupled to the air supply duct 64 or an array of air supply ducts 64.

Although the second air source has been described as a compressor bleed from the intermediate pressure compressor 16, other sources are within the scope of the present invention. The second air source may be a compressor bleed from the high pressure compressor 18, or from the bypass duct 32. A compressor bleed may be tapped from an intermediate position axially along the compressor and not at the back end where air is delivered to the next component in the gas path through the gas turbine engine 10. There may be multiple second air sources, for example from the intermediate pressure compressor 16 and from the high pressure compressor 18.

Other seals than bearing chamber seals 48 may be supplied with equal felicity by the sealing air supply system 100 of the present invention. Other types of switching mechanism 68 and ducts are within the scope of the present invention.

In some applications of the present invention, no buffer 40 is provided. Instead, sealing air is supplied directly from the source to the bearing chamber seal 48. There may be an intermediate chamber which performs other functions in addition to buffering. Thus a chamber may act as buffer 40 but also have other functions. In this arrangement the buffer seal 49 is also omitted.

Other types of chamber 44 may be sealed using the sealing air system 100 of the present invention. For example, a gearbox or oil tank may be ventilated using a bearing chamber seal 48. The gearbox or oil tank therefore includes an air supply duct 64 which is supplied with motive fluid from the first duct 66 in accordance with the present invention. Other types of switching mechanism 68 and ducts are within the scope of the present invention. The switching may be controlled on the basis of any parameter from which pressure can be inferred, although it is not necessary to calculate pressure if the relationship between pressure and the other parameter is known. Examples of such parameters include mass flow, temperature, shaft speed, throttle position, variable geometry position, inlet conditions or a combination of these.

The sealing air supply system 100 of the present invention has been described with particular reference to a gas turbine engine 10 used to power an aircraft. However, it is equally applicable to any gas turbine engine 10 used for other purposes including marine and industrial gas turbine engines. It also finds application in wind turbines and tidal turbines. Although the lubricant fluid is generally oil it may be other lubricants, especially in other applications.

The sealing air supply system 100 of the present invention can be retro-fitted to existing gas turbine engines 10 with minor modifications to the ducting already available. Thus existing gas turbine engines 10 can obtain the advantages of the present invention with little investment. There is little impact on the starter air system 56 as the bearing chamber seals 48 will draw up to 20% of starter air during starting, which is not detrimental to the starting functionality.

## Claims

1. A gas turbine engine sealing air supply system (100) comprising:
• a bearing chamber seal (48) to prevent lubricant fluid loss from a fluid chamber (44), the sealing effected by ingress of sealing air;
• an air supply duct (64) coupled to the bearing chamber seal (48) to provide the sealing air;
• a starter air system (56) of the gas turbine engine (10); and
• a first duct (66) coupled between the starter air system (56) and the air supply duct (64) to supply the sealing air during gas turbine engine (10) starting.

2. A sealing air supply system (100) as claimed in claim 1 further comprising a second air source (16) and a second duct (38) coupled between the second air source (16) and the air supply duct (64) to supply the sealing air during other periods of gas turbine engine (10) operation.

3. A sealing air supply system (100) as claimed in claim 2 wherein the second air source (16) comprises a compressor bleed of the gas turbine engine (10) and the second duct (38) comprises a bleed duct.

4. A sealing air supply system (100) as claimed in any preceding claim further comprising a switching mechanism (68) to switch the supply of sealing air between the starter air system (56) and the second air source (16).

5. A sealing air supply system (100) as claimed in claim 4 further comprising a control system (70) arranged to control the switching mechanism (68).

6. A sealing air supply system (100) as claimed in claim 5 wherein the control system (70) is arranged to switch between the starter air system (56) and the second air source (16) dependent on the air pressure of the starter air system (56).

7. A sealing air supply system (100) as claimed in claim 5 wherein the control system (70) is arranged to switch between the starter air system (56) and the second air source (16) dependent on the air pressure of the second air source (16).

8. A sealing air supply system (100) as claimed in claim 5 wherein the control system (70) is arranged to switch between the starter air system (56) and the second air source (16) dependent on the relative air pressure of the starter air system (56) and the second air source (16).

9. A sealing air supply system (100) as claimed in any preceding claim comprising more than one bearing chamber seal (48) each coupled to the air supply duct (64) to receive the sealing air.

10. A sealing air supply system (100) as claimed in any preceding claim wherein the starter air system (56) comprises a starter air turbine (58), a starter air valve (60) and a starter air supply duct (62) coupled therebetween.

11. A sealing air supply system (100) as claimed in any preceding claim further comprising a non-return valve (72) in the first duct (66).

12. A sealing air supply system (100) as claimed in any of claims 2 to 11 further comprising a non-return valve (74) in the second duct (38).

13. A sealing air supply system (100) as claimed in any preceding claim wherein the first duct (66) is coupled between the starter air system (56) and the air supply duct (64) to supply sealing air at other periods of gas turbine engine (10) operation.

14. A sealing air supply system (100) as claimed in any preceding claim wherein the fluid chamber (44) comprises a bearing (42).

15. A gas turbine engine (10) comprising a sealing air supply system (100) as claimed in any preceding claim.

## Patentansprüche

1. Dichtendes Gasturbinenmotor-Luftzufuhrsystem (100), umfassend:
• eine Lagerkammerdichtung (48), um Schmierfluidverlust aus einer Fluidkammer (44) zu verhindern, wobei die Dichtung durch Eindringen von dichtender Luft bewirkt wird;
• ein Luftzufuhrkanal (64), der mit der Lagerkammerdichtung (48) gekoppelt ist, um die dichtende Luft bereitzustellen;
• ein Starterluftsystem (56) des Gasturbinenmotors (10); und
• einen ersten Kanal (66), der zwischen dem Starterluftsystem (56) und dem Luftzufuhrkanal (64) gekoppelt ist, um die dichtende Luft während des Startens des Gasturbinenmotors (10) bereitzustellen.

2. Dichtendes Luftzufuhrsystem (100) nach Anspruch 1, ferner umfassend eine zweite Luftquelle (16) und einen zweiten Kanal (38), der zwischen der zweiten Luftquelle (16) und dem Luftzufuhrkanal (64) gekoppelt ist, um die dichtende Luft während anderer Zeiträume des Betriebs des Gasturbinenmotors (10) zuzuführen.

3. Dichtendes Luftzufuhrsystem (100) nach Anspruch 2, wobei die zweite Luftquelle (16) einen Kompressorausstrom des Gasturbinenmotors (10) umfasst und der zweite Kanal (38) einen Auslasskanal umfasst.

4. Dichtendes Luftzufuhrsystem (100) nach einem der vorstehenden Ansprüche, ferner umfassend einen Schaltmechanismus (68) zum Umschalten der Zufuhr dichtender Luft zwischen dem Starterluftsystem (56) und der zweiten Luftquelle (16).

5. Dichtendes Luftzufuhrsystem (100) nach Anspruch 4, ferner umfassend ein Steuersystem (70), das angeordnet ist, um den Schaltmechanismus (68) zu steuern.

6. Dichtendes Luftzufuhrsystem (100) nach Anspruch 5, wobei das Steuersystem (70) angeordnet ist, um zwischen dem Starterluftsystem (56) und der zweiten Luftquelle (16) abhängig vom Luftdruck des Starterluftsystems (56) umzuschalten.

7. Dichtendes Luftzufuhrsystem (100) nach Anspruch 5, wobei das Steuersystem (70) angeordnet ist, um zwischen dem Starterluftsystem (56) und der zweiten Luftquelle (16) abhängig vom Luftdruck der zweiten Luftquelle (16) umzuschalten.

8. Dichtendes Luftzufuhrsystem (100) nach Anspruch 5, wobei das Steuersystem (70) angeordnet ist, um zwischen dem Starterluftsystem (56) und der zweiten Luftquelle (16) abhängig vom relativen Luftdruck des Starterluftsystems (56) und der zweiten Luftquelle (16) umzuschalten.

9. Dichtendes Luftzufuhrsystem (100) nach einem der vorstehenden Ansprüche, umfassend mehr als eine Lagerkammerdichtung (48), die jeweils mit dem Luftzufuhrkanal (64) gekoppelt ist, um die dichtende Luft zu empfangen.

10. Dichtendes Luftzufuhrsystem (100) nach einem der vorstehenden Ansprüche, wobei das Starterluftsystem (56) eine Starterluftturbine (58), ein Starterluftventil (60) und einen dazwischen gekoppelten Starterluftzufuhrkanal (62) umfasst.

11. Dichtendes Luftzufuhrsystem (100) nach einem der vorstehenden Ansprüche, ferner umfassend ein Rückschlagventil (72) im ersten Kanal (66).

12. Dichtendes Luftzufuhrsystem (100) einem der Ansprüche 2 bis 11, ferner umfassend ein Rückschlagventil (74) im zweiten Kanal (38).

13. Dichtendes Luftzufuhrsystem (100) nach einem der vorstehenden Ansprüche, wobei der erste Kanal (66) zwischen das Starterluftsystem (56) und den Luftzufuhrkanal (64) gekoppelt ist, um dichtende Luft zu anderen Zeiträumen des Betriebs des Gasturbinenmotors (10) zuzuführen.

14. Dichtendes Luftzufuhrsystem (100) nach einem der vorstehenden Ansprüche, wobei die Fluidkammer (44) ein Lager (42) umfasst.

15. Gasturbinenmotor (10), umfassend ein dichtendes Luftzufuhrsystem (100) nach einem der vorstehenden Ansprüche.

## Revendications

1. Système d'acheminement d'air d'étanchéité de moteur à turbine à gaz (100) comprenant :
• un joint de chambre de palier (48) pour empêcher une perte de fluide de lubrification provenant d'une chambre de fluide (44), le joint étant réalisé par l'admission d'air d'étanchéité ;
• un conduit d'acheminement d'air (64) couplé au joint de chambre de palier (48) pour fournir l'air d'étanchéité ;
• un système d'air de démarrage (56) du moteur à turbine à gaz (10) ; et
• un premier conduit (66) couplé entre le système d'air de démarrage (56) et le conduit d'acheminement d'air (64) pour acheminer l'air d'étanchéité durant le démarrage du moteur à turbine à gaz (10).

2. Système d'acheminement d'air d'étanchéité (100) selon la revendication 1, comprenant en outre une seconde source d'air (16) et un second conduit (38) couplé entre la seconde source d'air (16) et le conduit d'acheminement d'air (64) pour acheminer l'air d'étanchéité durant les autres périodes de fonctionnement du moteur à turbine à gaz (10).

3. Système d'acheminement d'air d'étanchéité (100) selon la revendication 2, ladite seconde source d'air (16) comprenant un prélèvement de compresseur du moteur à turbine à gaz (10) et ledit second conduit (38) comprenant un conduit de prélèvement.

4. Système d'acheminement d'air d'étanchéité (100) selon l'une quelconque des revendications précédentes, comprenant en outre un mécanisme de commutation (68) pour commuter l'acheminement de l'air d'étanchéité entre le système d'air de démarrage (56) et la seconde source d'air (16).

5. Système d'acheminement d'air d'étanchéité (100) selon la revendication 4, comprenant en outre un système de commande (70) agencé pour commander le mécanisme de commutation (68).

6. Système d'acheminement d'air d'étanchéité (100) selon la revendication 5, ledit système de commande (70) étant agencé pour commuter entre le système d'air de démarrage (56) et la seconde source d'air (16) en fonction de la pression d'air du système d'air de démarrage (56).

7. Système d'acheminement d'air d'étanchéité (100) selon la revendication 5, ledit système de commande (70) étant agencé pour commuter entre le système d'air de démarrage (56) et la seconde source d'air (16) en fonction de la pression d'air de la seconde source d'air (16).

8. Système d'acheminement d'air d'étanchéité (100) selon la revendication 5, ledit système de commande (70) étant agencé pour commuter entre le système d'air de démarrage (56) et la seconde source d'air (16) en fonction de la pression d'air relative du système d'air de démarrage (56) et la seconde source d'air (16).

9. Système d'acheminement d'air d'étanchéité (100) selon l'une quelconque des revendications précédentes comprenant plus d'un joint de chambre de palier (48) couplé chacun au conduit d'acheminement d'air (64) pour recevoir l'air d'étanchéité.

10. Système d'acheminement d'air d'étanchéité (100) selon l'une quelconque des revendications précédentes, ledit système d'air de démarrage (56) comprenant une turbine d'air de démarrage (58), une soupape d'air de démarrage (60) et un conduit d'acheminement d'air de démarrage (62) couplé entre celles-ci.

11. Système d'acheminement d'air d'étanchéité (100) selon l'une quelconque des revendications précédentes, comprenant en outre un clapet anti-retour (72) dans le premier conduit (66).

12. Système d'acheminement d'air d'étanchéité (100) selon l'une quelconque des revendications 2 à 11, comprenant en outre un clapet anti-retour (74) dans le second conduit (38).

13. Système d'acheminement d'air d'étanchéité (100) selon l'une quelconque des revendications précédentes, ledit premier conduit (66) étant couplé entre le système d'air de démarrage (56) et le conduit d'acheminement d'air (64) pour acheminer l'air d'étanchéité à d'autres périodes de fonctionnement du moteur à turbine à gaz (10).

14. Système d'acheminement d'air d'étanchéité (100) selon l'une quelconque des revendications précédentes, ladite chambre de fluide (44) comprenant un palier (42).

15. Moteur à turbine à gaz (10) comprenant un système d'acheminement d'air d'étanchéité (100) selon l'une quelconque des revendications précédentes.
